# EUROPEAN PATENT APPLICATION

(11) **EP 2 549 429 A1**
(43) Date of publication of application: **23.01.2013**
(21) Application number: 11305958.8
(22) Date of filing: 22.07.2011
(51) Int. Cl.: G06Q 50/00, G06Q 30/00, G06Q 10/00

(54) **System and method for improving dynamic availability computation**

(71) Applicant: Amadeus S.A.S., 06410 Biot (FR)
(72) Inventor: Pradignac, Mathieu, 87480 Saint Priest Taurion (FR); Ambolet, Patrice, 06560 Valbonne (FR); Pioger, Aurélien, 06600 Antibes (FR)
(74) Representative: Hautier, Nicolas

(57) **Abstract**

In one aspect thereof the invention provides a system to determine an availability of a travel solution. The system includes an interface to receive a request from a travel provider that can provide a travel solution fulfilling the request, the request including an origin, a destination, a date and a time. The system further includes at least one data processor configured with at least one non-transitory memory storing computer program code. Execution of the computer program code by the at least one data processor causes the at least one data processor to query a first database to determine at least one competing travel provider that that can provide another travel solution fulfilling the request, to query a second database to determine a lowest available fare charged by the identified at least one competing travel provider, and to query a third database to obtain an adjustment factor for use in computing an adjusted yield value for the travel solution of the travel provider. The adjustment factor has a value that is a function of the determined lowest available fare and a current yield value. The at least one data processor is configured to make an availability determination for the travel solution based at least on the adjusted yield value.

## Description

### TECHNICAL FIELD:

The exemplary embodiments of this invention relate generally to systems and methods used for automated travel inventory management and reservation and, more specifically, relate to systems and methods for computing revenue availability with active valuation.

### BACKGROUND:

Certain terms used in the following description are defined as follows:
Leg: A non-stop journey between a "departure" point and an "arrival" point.
Segment: One or more legs, sharing the same commercial travel number (for instance flight number). A segment is a saleable product.
Interline segment: A segment which is operated by a carrier (an airline for instance) other than a current reference carrier.
Connection: A connection consists of at least two segments of at least two travels (flight numbers for instance), e.g., PAR-JFK based on the flights YY 761 (PAR-FRA) and YY 400 (FRA-JFK). A connection includes one or more via points, i.e., connecting city/station or airport.
O&D: Origin and Destination - an O&D can be composed of one or several segments.
Cabin: Physical section of transport apparatus (aircraft, train, bus, boat etc) such as First Class or Economy (Eco).
Booking Class: Marketing segmentation of the cabin used for reservations control (directly related to a fare). Examples of Booking Classes (or more simply class) in the Cabin Economy can be, for example, Booking Class Eco 1 (exchangeable and refundable); Booking Class Eco 3 (no exchange, no refund).
Availability: The number of seats available for sale in a specific (sub-)class, on a single segment or for an O&D Itinerary. The Availability can be used to accept or deny further bookings in that class.
Yield: The Yield is defined for each class and O&D and is an estimation of how much revenue the carrier (airline for instance) receives from a sale on the associated O&D/class.
Effective Yield: The O&D Yield minus the sum of all leg/cabin bid prices crossing the O&D.
Bid Price: A net value (Bid Price) for an incremental seat on a particular travel/leg/cabin in the carrier network (for instance flight/leg/cabin in the airline network). It represents the marginal value of a given travel/cabin/leg, also referred to as minimum acceptable net revenue, hurdle rate, shadow price, displacement cost, or dual cost. The Bid Price is the minimum revenue at which the carrier wishes to sell the next seat.
Bid Price Vectors: A measure of the minimum prices for which the remaining seats on a leg/cabin can be sold (Bid Price curve).
RAAV: A Revenue Availability with Active Valuation system that is operated by a provider of reservation system or global distribution system (GDS) such as Amadeus s.a.s. for instance. The RAAV system can be used to adjust the Yield value based on the context of a request.

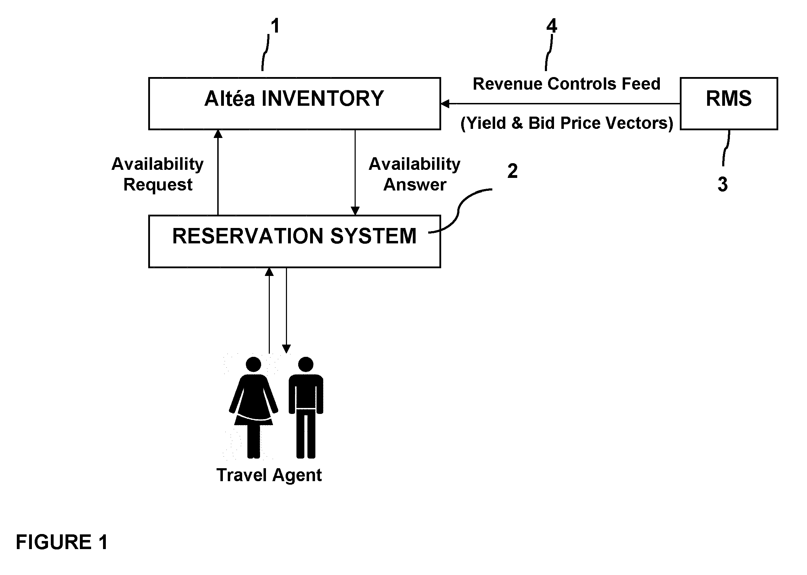

There is at least one tool currently accessible to airlines for computing availability at the O&D level, using revenue control data (Yield and Bid Price Vector). Figure 1 describes the different systems involved in the availability calculation process and shows an Inventory system 1 that receives availability requests from a reservation system 2 and that replies with availability answers. The process works in conjunction with a Revenue Management System (RMS) 3 that supplies a Revenue Control feed 4 comprised of Yield and Bid Price Vectors.

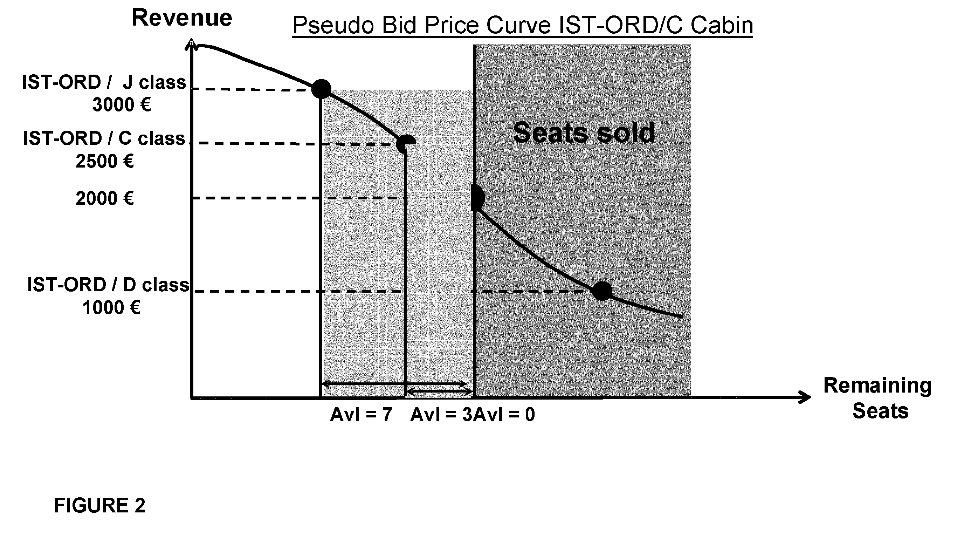

To compute a revenue availability using the Revenue Controls the Inventory system 1 draws a comparison between the Yield value (available at the O&D/booking class level) and Bid Price Vectors (available at leg/cabin level). Figure 2 shows a basic procedure for how the availability is determined for a given Yield. The data used are fed into the Inventory system 1 by the Revenue Management System 3 of the airline. For a given O&D/booking class level, if the Yield is superior to the current Bid Price, then at least a seat is available for that O&D/booking class level. The class is said to be 'open'. If the Yield is inferior to the current Bid Price, then no more seats are available for that O&D/booking class level. The class is said to be 'closed'. On the example of Figure 2, at the time of the availability request the Bid Price is 2000€. Class D is closed since its Yield is inferior to 2000€ and classes C and J are still open since their Yield amounts to 2500€ and 3000€ respectively.

The RMS 3 uses historical data, forecasted demand and statistical algorithms to compute the Yield values for all O&D/booking classes sold by the airline on its network. The Yield is a monetary value that can differ from the price of the ticket that will be eventually paid by the customer. However, it generally represents a value of revenue expected by the airline for the O&D/booking class. In general, the Yield can be modified to include, for example, charges for airport taxes and fuel, and thus can differ from the ticket price.

WO/2008/088387, Strategic Planning and Revenue Management System, generally deals with revenue management and discusses competition in this perspective, but not with any reference to Yield data. For example, an input step 504 is described as loading into the system data defining external strategies used by competitive organizations. The external strategies are defined in substantially the same way as an internal strategy, but represent a best understanding of the strategies which competitors are expected to use. The external strategies may include capacity limitations. For example, the strategy of a competitor may be modeled as including a term which forces the competitor to simply stop selling tickets when it reaches a certain number of tickets in a particular window or on a particular day.

Reference can also be made to WO/2008/020307, System for Concurrent Optimization of Business Economics and Customer Value, which generally describes a computer-implemented system and method for an airline to enhance a customers' experience.

### SUMMARY

The foregoing and other problems are overcome, and other advantages are realized, in accordance with the embodiments of this invention.

In accordance with a first aspect thereof the exemplary embodiments of this invention provide a computer-implemented method to determine an availability of a travel solution. The method comprises receiving a request for a travel solution from a travel provider that can provide a travel solution fulfilling the request, the request being comprised of an origin, a destination, a date and a time. The method also comprises the following steps performed with at least one data processor: identifying at least one competing travel provider that can provide another travel solution fulfilling the request; determining a lowest available fare charged by the identified at least one competing travel provider; computing an adjusted yield value for the travel solution of the travel provider based on an adjustment factor having a value that is a function of the determined lowest available fare and a current yield value; and making an availability determination for the travel solution based at least on the adjusted yield value.

Optionally, the method may comprise any one of the following facultative features:
- The availability determination comprises comparing the adjusted yield value to a current bid price for the travel solution, and replying positively to the request if the adjusted yield value exceeds the current bid price.
- Identifying at least one competing travel provider comprises querying a database, where the query comprises the origin, the destination, a departure date and a departure time.
- The query further comprises a point of sale.
- A response to the query comprises an identification of at least one competing travel provider providing a corresponding travel solution using the same routing as the travel provider or a different routing, and one of the same or similar absolute or relative departure time, said competing travel solution being said other travel solution.
- Determining a lowest available fare comprises querying a database of competitor data using the identified at least one competing travel provider.
- The database of competitor data comprises data that is updated in real time or substantially real time by a third party.
- The adjustment factor is obtained by querying a database using at least the origin and the destination.
- The adjustment factor that is used is also a function of a booking class, and comprises a value expressed as a percentage that is multiplied by the current yield value and an optional absolute adjustment value that is added to or subtracted from the result of the multiplication.
- The adjustment factor has a value that is also a function of a current load factor for the travel solution.
- The adjustment factor has a value that is also based on at least one of a point of sale rule, a trip characteristics rule, an inter-line yield factor rule and a customer characteristics rule.
- The availability determination for the travel solution is also based on at least one of a point of sale rule, a trip characteristics rule, an inter-line yield factor rule and a customer characteristics rule.
- The travel provider is an airline.
- The competing travel provider is any one of an airline, a company providing train or boat or bus transportations.

In accordance with another aspect thereof the exemplary embodiments of this invention provide a system to determine an availability of a travel solution. The system comprises an interface to receive a request for a travel solution from a travel provider that can provide a travel solution fulfilling the request, the request being comprised of an origin, a destination, a date and a time. The system further comprises at least one data processor configured with at least one non-transitory memory storing computer program code. Execution of the computer program code by the at least one data processor causes the at least one data processor to query a first database to determine at least one competing travel provider that can provide another travel solution fulfilling the request, to query a second database to determine a lowest available fare charged by the identified at least one competing travel provider, and to query a third database to obtain an adjustment factor for use in computing an adjusted yield value for the travel solution of the travel provider. The adjustment factor has a value that is a function of the determined lowest available fare and a current yield value. The at least one data processor makes an availability determination for the travel solution based at least on the adjusted yield value.

In accordance with another aspect thereof the exemplary embodiments of this invention provide a computer-implemented method to determine an availability of a travel solution, comprising: receiving at a travel provider a request for an availability; determining at least a travel solution that fulfills the request; identifying at least another travel solution that also fulfills the request and that is provided by a competing travel provider; determining a lowest available fare charged by the competing travel provider providing the identified at least another travel solution; computing an adjusted yield value for the travel solution of the travel provider taking into account the determined lowest available fare for; and making an availability determination for the travel solution based at least on the adjusted yield value.

### BRIEF DESCRIPTION OF THE DRAWINGS

The foregoing and other aspects of the embodiments of this invention are made more evident in the following Detailed Description, when read in conjunction with the attached Drawing Figures, wherein:
Figure 1 is a simplified block diagram that shows different systems involved in an Availability calculation process.
Figure 2 is a graph that illustrates how availability is determined for a given Yield.
Figures 3A, 3B, 3C and 3E are diagrams showing various modules and are helpful in understanding the operation of the exemplary embodiments of this invention.
Figure 3D shows an overall process flow between the Inventory system and a Competition Identification Rules database, a Competitors Behaviors database and a Competition Adjustment Rules database.
Figure 4 shows an example of a Competition Identification rule that is used to determine eligibility criteria for another airline travel solution to be competitive.
Figure 5 shows an example of a Competition Adjustment rule that is used to determine Yield adjustments.
Figure 6 is an overview of the system architecture including the various Rules and interaction with a RAAV simulator.
Figure 7 shows an example of RAAV simulator screen shot for a set of simulation criteria.
Figures 8, 9 and 10 show the use of the Competition Identification rule of Figure 4, a resulting lowest fare determination, and the Competition Adjustment rule of Figure 5, respectively, in the context of an example of the use of the invention.
Figure 11 illustrates an example of a RAAV Multiple Match Logic.
Figure 12 is a block diagram showing an overview of a high level architecture of a portion of a system that includes a revenue evaluation component.
Figure 13 is a logic flow diagram that is descriptive of a method in accordance with the exemplary embodiments of this invention.

### DETAILED DESCRIPTION

The competitive environment is continually evolving and can be affected by any change in the market. These market changes can occur rapidly with little or no advance notice. However, the RMS 3 as in Figure 1 that is performing its Yield computations that are fed into the Inventory system 1 generally operates on a daily basis. As a result the RMS 3 cannot take into account the fare prices being charged by competitors, at least not in a real time or substantially real time basis.

As employed herein a "travel solution" may be generally considered as a means of traveling from a point A (origin) to a point B (destination) at certain date and time. A particular travel solution may be composed of legs, segments or inter-line segments, although the embodiments of this invention are not limited for use with only air travel and air carriers.

The use of the exemplary embodiments of this invention provides an ability to reflect in real time a competitor's prices on a reference carrier's Yield value by adjusting the Yield value (increasing or decreasing the Yield value).

The exemplary embodiments of this invention provide in one aspect thereof an enhancement to a Revenue Availability with Active Valuation (RAAV) system to include as an element the travel offerings of competitors. The RAAV system, described in further detail below, allows the customization of the Yield value used for any request based on the context of the request (e.g., point-of-sale (PoS), Trip & Customer characteristics). More specifically, in the RAAV system the Yield adjustment computed for each request is based on PoS, Trip & Customer characteristics, frequent flyer program, the airline operating the flight when the airline that is selling the flight is different from the one operating the flight, and so forth.

This invention is related to the analysis of competitor data (such as the lowest fares available) in order to impact the reference airline's availability and prices (by impacting the Yield value and providing additional data in a decision support tool). Thus, the reference airline can readily and quickly adapt to the market it is competing in. In general, the availability computation can be influenced without affecting the price paid by the customer.

Although airlines can be assumed to consider the behavior of their competitors few if any have a substantially automated process to react to it. What processes do exist are at the segment level and are not focused on increasing the revenue of the airline, but instead outselling the competitor for that segment. Moreover, observations made on a competitor's commercial strategy is reflected in fares (i.e., on prices paid by the customer) but not on Yields and availability, hence there is a lack of reactivity.

To remedy this deficiency an aspect of the invention is to create an additional RAAV system rule, i.e., a Competition rule. The Competition rule is beneficially applied at the O&D level, dynamically, and automatically for any request (Sell or Availability) so as to modify, if required, the Yields and Availability of any class. The use of this Competition rule can be used when competing with any type of carriers (low cost or not). For example, a certain carrier (carrier_1) may wish to monitor the O&D NCE-JFK of carrier_2 and carrier_3 since, from a user point of view, it is basically the same to fly NCE-CDG-JFK and NCE-LHR-JFK. or NCE-FRA-JFK.

A process is established to adapt automatically in real time the availability with the competitor information received, opening or increasing availability of some classes or closing or decreasing availability for others depending on the strategy of the airline.

The process provides a fast, dynamic, automatic and real time response to competitor strategy changes at the O&D level whatever the type of competitor. This includes competitors offering other transportation modalities (e.g., bus, high speed rail, etc.)

Safeguards are included to avoid any potential 'spiral down' consequence of the automated process. A RAAV simulator allows an airline user to observe the impact of the business rules created in the system, and can be set to isolate the impact of the Competition adjustment rule(s) in terms of Yield adjustment and then availability adjustment. In this way the airline user can initially apply the competition adjustment in the simulations before applying it to actual incoming availability requests.

The invention provides a viable, user controlled and scalable solution for a very complex problem. A most comprehensive solution would be the automatic check of all competitors' prices. However, this generally is not feasible to do in that too much time would be required to perform an availability evaluation. The use of this invention simplifies this problem and adapts it to current market trends and needs.

Even though most if not all airlines monitor their competitors strategies and adapt their Revenue Management Strategy to the results of the monitoring, prior to this invention there was no dynamic process to fulfill this need. Moreover, the use of this invention enables Competition to be handled at the O&D level and not at the segment level. This is an important improvement as the general trend is for airlines to optimize their revenue at the O&D level.

The exemplary embodiments enable in real time for modifiers to be applied at request (Sell or Availability) time and take the precise context of the request into account to make the adjustment. Thus the answer to any request is specific to that request. Further, based on the Business Rule used, the creation/deletion/update can immediately and dynamically be taken into account in production. Further, the entire process is automated and is flexible as to the origin of the competitors' data. Indeed, a fully scalable database can be fed by the airline (e.g., through a third party) at the required frequency, and the airline users also have the possibility to update, create or delete records in the database so that changes are immediately taken into account. Further, impact caps can be defined to avoid the potential spiral-down effect. Moreover, for airlines that want to allow a certain budget to competition, a Competition Buffer can be set (monetary amount) and decreased by all of the positive adjustments made to the Yields (when the airline artificially increase Yield values of certain classes to enhance availability of products impacted by competition). Thus, when the allocated budget has been consumed the competition adjustments terminate and the airline can control its usage of the product. Further, and as was noted, the process operates at the O&D level. In addition the process can take into account other airline and reference airline contexts into account, as well as competitors' Fares. In addition, Load Factor Criteria (reference airline) can be considered, as this information is not known by the RMS 3 when performing once a day network optimization. In the conventional sense the RMS 3 has a full picture at a certain specified time, but it cannot adjust its strategy during the day. The Load Factor allows weighting the adjustment of the Yield based on the seats already purchased. For example, when the Load Factor is low the adjustment of the Yield through the mechanism of the invention will greatly impact the Yield taking thereby into account the competitive environment.

The data fed to the system containing the competitors' prices can come from the airline itself and possibly one or more third parties and is integrated into the proper format enabling the airline to select a preferred provider for the competitors' data. A third party can be a company that automatically generates many reservation requests in order to populate a database of available fares, and this database can then be sold to an airline as it provides important information regarding the fares offered by competitors of the airline.

Before describing the exemplary embodiments of this invention in further detail it will be useful to provide an overview of the above-mentioned RAAV (Revenue Availability with Active Valuation) system. The RAAV system is but one example of a system in which the Competition Rules system and method of this invention can be integrated and deployed.

The RAAV system enables airlines to adapt their availability based on revenue controls in order to reflect different demand scenarios. By being able to tailor the availability dynamically through rule-based modifications of the Yield, the Yield granularity is improved and the revenue expected per O&D is ultimately more optimized than it would be by using pure Revenue Management System recommendations. Active Valuation rules allow for a more precise customization of the availability calculation process at demand level. In addition, Decision Support Tools available in Active Valuation enable the user to evaluate the strategic importance of the modifier rules defined to modify the Yield as well as the combined effect of different modifier rules.

An Active Valuation Simulator allows the user at rule creation/update time to visualize the impacts of the pending modifier rules as compared to the situation without any modifier rules in place, and with already submitted rules in place.

In addition, Active Valuation Rule Usage Statistics enable the user to identify the most tactical rules that are used in availability and sell requests. This can be based on, for example, previous times that the rule has been used and, in addition, the user can identify with the help of the statistics the times the adjustment has been capped by set cap values.

The Activate Valuation rules provide a powerful influence on the Revenue Availability decision, enabling the user to enforce customer segmentation while maximizing the benefit of the Revenue Management O&D mix. This tool also enables airlines to define rapidly innovative business policies, such as improved availability based on time of booking or promotion on weak load factor flights by improving availability, without having to change the optimization of the RMS 3.

In addition, the Active Valuation Decision Support tools, and in particular the Simulator, provide a global vision of the Availability situation, enabling the user to compare the class offer within and between flights, thus enabling the user to have an improved level of awareness. The Active Valuation Simulator can be used in conjunction to an Inventory Availability Simulator; the Active Valuation Simulator is dedicated to the simulation of O&Ds for which the Yield has been adjusted via the Active Valuation rules.

The following discussion assumes that Journey Data is used as a useful parameter to maximize both Revenue Availability and Active Valuation benefits.

The Revenue Availability with Active Valuation (RAAV) system enables tailoring of the Yield in real-time, for an availability or sell request, based on standard or add-on rules defined by the user. In addition the user can subscribe to an Active Valuation Decision Support tools package that contains tools for simulating and monitoring the impact of the update before and after submitting the rule modification.

An Active Valuation cycle that aims to ensure that the rule updates done by the user at are well informed decisions, thanks to the possibility to simulate the impact before submitting the rule. In addition once the rule has been updated, the user can monitor the impact of the rule via Active Valuation Rule Usage Statistics and, if needed, apply further updates.

Active Valuation rules can be set up to reflect the revenue generated by its different market segments; identification of segment can be based on the point of sale where the request originates (via an Active Valuation Point of Sale rule), based on the trip characteristics of the requested fare (via a Trip Characteristics rule), and based on customer details such as frequent flyer card and associated tier level (via a Customer Characteristics rule). In addition, the user can also reflect a specific willingness to pay related to a specific geographic area, distribution channel or customer segment. In addition it is possible to reflect costs (e.g., channel related costs) in the equation as well as proration agreements or promotional campaigns that generate lower revenues per booking. Differentiation in service via tailored availability per customer tier (via the Customer Characteristics rule) may also be a way for the carrier to help counter competition within the valued customer segments. Preferential differentiation is also expected to help increase customer loyalty and retention.

Other features include a high consistency between availability and sell answers, enabled by a real-time availability calculation, and a capacity to support high traffic volumes generated by online channels.

Discussed now are different Active Valuation Yield Modifier Rules available, and Matching Logic that applies for selecting the most applicable rule.

The Active Valuation Yield Modifier Rules are used to adjust Yields according to specific rules criteria established by the airline. They can be accessed via an Inventory Graphical User Interface and can be modified at any time, in real-time, in order to create adjustments based on a Point of Sale rule, a Trip Characteristics rule, an Interline Yield Factor rule or a Customer Characteristics rule.

The user can also choose to combine different Yield modifiers, i.e., to apply different rules on the same availability request. In order to maintain control over the overall Yield adjustment, the airline also has the possibility to define cap values for all rules or per rule type in the external system settings.

The Point of Sale rule intends to model the change of the "willingness to pay" a customer has depending on the location from which the booking request is made. It can also be used to reflect certain costs linked to a distribution channel or lower revenues per booking for specific promotional campaigns that are done, for instance, via the online channel. The adjustment, that can be a percentage or a fixed value, is applied on the Base O&D. The adjustment allows the user to increase or decrease availability of a set of classes for requests coming from a certain Point of Sale and for a given O&D, depending on the current load factor or the expected load factor of the O&D. This allows the user to define different behaviors on empty flights as compared to almost full flights. Further criteria that can be used to target the Yield adjustment are also available, such as sale date or sale time, sale in terms of days before departure.

This Point of Sale rule type enables the airline to be more flexible and better monitor the availability given to each Point of Sale, depending on the market destination and the type of customer. The result of this type of adjustments increases and protects revenue.

The Trip characteristics rule is accessed by O&D. It aims at providing some adjustments to the stored Yields based on the requested trip characteristics. It helps the user to determine the type of passenger (leisure or business) that is being targeted according to the length of stay or the trip characteristic (one way, return trip, day of travel, etc). Different criteria (mandatory and optional) for the Trip Characteristics Rule can include Trip type, which specifies if the rule applies to O&Ds part of a return trip or only one way, and a Frequency, which refers to the O&D departure day of the week.

By the use of this business rule an analyst can define adjustments to increase the lowest class availability for leisure passengers (identified by their request of a return trip over two weeks for instance, and departing on a Friday evening or Saturday morning), and decrease these same classes availabilities for passengers identified as business (short length of stay, departure rather on Sunday or Monday, etc.)

An Interline Yield Modifier Rule intends to reflect the loss of revenue an airline faces when using O&D Yield availability calculation to grant a seat to a client traveling on this airline and on another airline in connection to go to the desired destination. The Interline Yield Factor rule is used and applied on Base O&D in a Geographical O&D context.

As an example of use, an agent could favor a connecting partner (i.e., alliance partner) rather than another airline by increasing the Yield thus increasing availability for that particular carrier.

A Customer Characteristics Rule can be an add-on to the standard Active Valuation rules. The Customer Characteristics rule aims at allowing adjustments to the Yield based on customer characteristics such as the frequent flyer customer priority code and airline card code. The Yield adjustment can be defined per actual load factor range, per booking class and per Frequent Flyer attributes such as priority code (0-9) and airline card owner. By the use of Customer Characteristics Rule frequent flyers can be favored with a given airline frequent flyer card and a higher priority rather than other customers that are not frequent flyers or have a lower priority, and enables the user to increase the Yield based on frequent flyer characteristics. Frequent flyer characteristics include the customer priority code and airline card code, enabling a higher level of granularity for tailoring the Yield to reflect the true revenue gain for a frequent flyer customer.

The Active Valuation rules can cover several business cases and all of them are not necessarily managed by the same person or even the same team within an airline. A "Multiple Match" functionality combines the application of these various business cases, so that not only is one applied to a request, but all of them (one rule is retrieved per business case: the most applicable defined for a rule set code).

A modifier application process includes the following functions:
1) All the rules which match the request are retrieved per rule type (POS, Trip Characteristics, Interline and Customer Characteristics) and rule set code.
2) For each class requested, and for each rule retrieved, the RAAV system compute the impact on the base of the Yield retrieved from the database.
3) The impacts are summed to determine a modifier type impact for each rule type (i.e. a POS adjustment impact, a Trip Characteristics impact, an Interline impact and a Customer Characteristics impact). Each of these is checked against airline-defined limits (also known as caps).
4) The RAAV system sums up the modifier type impacts to determine a global modifier impact and checks it against the cap value.
5) The last step calculates the adjusted Yield as the original Yield plus the global impact previously determined.

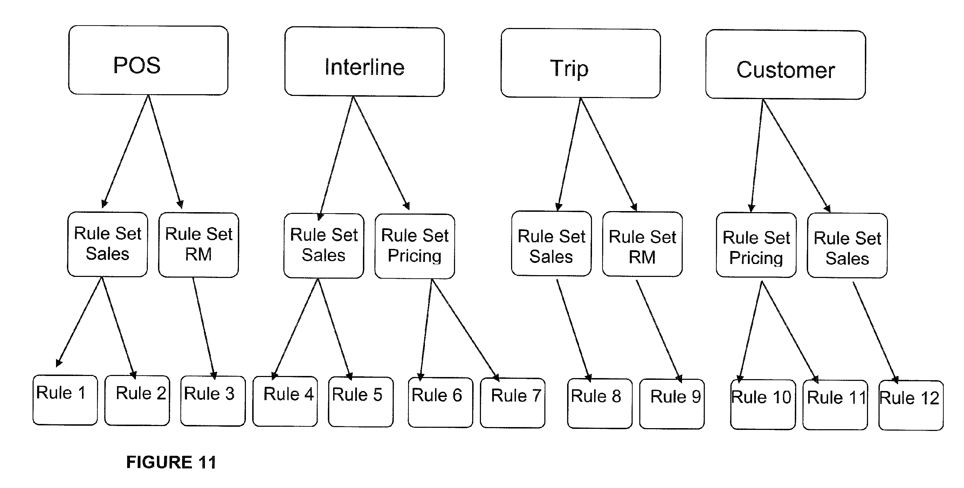

Three levels of rules are defined: Rule Type, Rule Set and Rule. The example shown in Figure 11 illustrates the case where three departments (Revenue Management (RM), Sales and Pricing) have defined rules for the different Rule Types. The figure also illustrates the three different rule levels, i.e., Rule Type, Rule Set and Rule that are involved in the Multiple Match Process and impact the Yield adjustments.

In this example, for the Point of Sale adjustment impact there are two rule sets for which the Rule Set Sales has two defined rules. For the Sales rule set, the most applicable one is chosen according to the weight and the context of the request, so Rule 1 or Rule 2 is selected, but not both. For the RM Rule Set only one rule has been defined, Rule 3, which is subsequently selected. The RAAV system then computes the impacts of each one of the two retrieved rules. To do so, it firstly applies the relative modifier to the original Yield retrieved for the requested class, then the absolute modifier, and then compares this value to the original Yield retrieved. As an example one may have an impact of -20$ for rule set Sales, and +100$ for rule set RM. The system then determines the Point of Sale impact as being the sum of the two, i.e. 100-20 = +80$. This value is then compared to the cap values defined by the airline. Assuming the airline does not want the Point of Sale impact to decrease more than 20% the original Yield, and not increase to more than 25% of the original Yield, and assuming as well that the original Yield retrieved (and already used to compute each rule impact) is equal to 400 $. In this case the maximum Yield increase authorized for the Point of Sale impact is so 400 * 0.25 = +100 $, and the maximum decrease is 400 * (-0.2) = - 80$. The point of Sale impact calculated previously respects these two limits and is therefore not capped.

The same logic applies for the other rule types (Trip Characteristics, Interline and Customer Characteristics), and at the end of this process the RAAV system computes the global modifier impact.

In case the sum of the impacts (adjustments) exceeds the "Global Impact Limit", the value is capped to the maximum limit value and a notification message can be sent.

The use of this Multiple Match Logic allows the airline to establish various rule sets on each business rule in order to have a Yield more adapted to its requirements, e.g. various departments within the airline can have their own rule sets. This allows the airline to apply multiple policies at the same time.

Active Valuation Decision Support Tools include the Active Valuation Simulator and the
Active Valuation Rule Usage Statistics.

The Active Valuation Simulator allows the user to simulate based on criteria such as the
simulation context (if no rule were to apply, if committed rules were to apply and if pending rules were to apply), base O&D, geographic O&D, sales date, travel date range, point of sale elements and so forth. The simulation is made at O&D level over a date range.

With regard to the Rule Usage Statistics, two levels of statistics are available:
1) Aggregated rule usage counters over a period and on a list of booking classes for both polling and sell requests; and
2) Rule usage evolution over a period of time and on a list of booking classes for a specific rule, for both polling and sell requests.

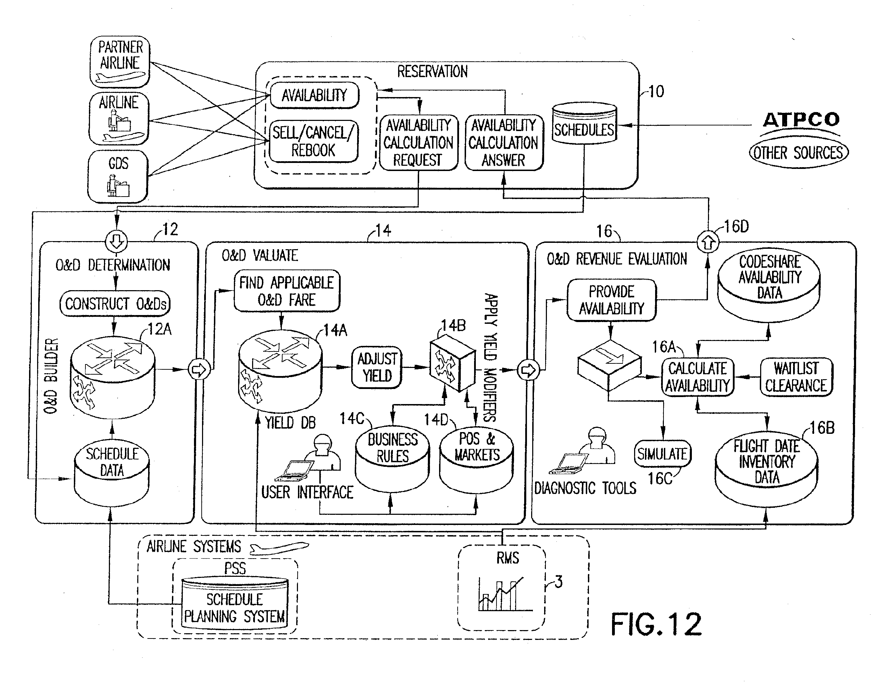

Figure 12 presents an overview of a high level architecture showing a portion of a system that includes an Inventory system having a revenue evaluation component or module. The Inventory receives availability or sell queries via the Reservation platform 10. The Reservation platform 10 can be one associated with a Global Distribution System (GDS), such as one provided by Amadeus s.a.s. These queries can originate from Travel Agents, Airline offices, Internet channels or from other Global Distribution Systems (GDSs). After operation of an O&D Determination module 12 and an O&D Valuation module 14 an Availability calculation 16A is performed in real-time at an O&D Revenue Evaluation module 16. The Availability calculation 16A uses Yield data, Yield Modifier Rules (if defined) and Inventory Bid Price information stored in the Inventory database 16B. The O&D Revenue Evaluation module 16 also includes the Simulator functionality 16C.

With respect to a Revenue Availability Flow, a first step performs the O&D Determination 12. The Inventory builds the O&Ds (12A) for which an availability answer is needed. This is referred to as the base O&D which, by definition, is fully operated by the airline system. All segments provided are considered as 'polled' or requested segments, connecting segments from other carriers and already confirmed segments (Journey Data) to compose (construct) the O&D for which the availability is requested. This process anticipates that the base O&D availability can be protected by associating the segments in the requesting Computer Reservation System (CRS). Availability is calculated for these O&Ds and the most restrictive availability by segment is retained. Secondly, the ability to accurately capture the real revenue for the airline is considered, as an interline situation might degrade the actual amount of revenue received compared to an online situation. Hence supplementary O&Ds are constructed, namely Geographical O&Ds, for each Base and Additional O&Ds and they are incorporated, as needed, into a full one-way O&D, should there be Interline segment connecting to them.

A second step performs the O&D Customer Valuation 14. For each O&D class, the system searches in a Yield database 14A the applicable fare, mapping the Origin & Destination and considering the country of the requestor, the date of travel, the date of sale (including advance purchase criteria). The Yield database 14A provides in return a unique fare applicable to the O&D, where an algorithm determines the best match considering the input parameters and the stored Yield data.

Active Valuation 14B is applied at this step, with the prerequisite that the user has a Yield database 14A at the O&D level. At this step to the Yield is retrieved and modified, if Active Valuation rules have been defined that match with the availability or sell request. Active Valuation relies on Business Rules 14C logic that is used to define the criteria of when an adjustment to the Yield should apply. A PoS and Markets database 14D is also consulted.

A third step performs the O&D Revenue Evaluation 16. After the O&D revenue has been determined, the next step is to compare it to the minimum revenue expected on each leg to determine the Availability. To do so the Bid Price Vector corresponding to the O&D is calculated, aggregating the Bid Price Vectors received from the RMS 3 for each leg of the journey covered. This pseudo Bid Price Vector (BPV, see Figure 2) created across all traversed legs is used to determine the lowest open class matching the O&D Yield. Note that in case of a missing BPV a Transient Bid Price Vector can be computed instead which is based on Yield and segment class availability. At the end of the process there is returned to the Reservation system 10 from an output interface 16D the availability or segment sell response. Such O&D evaluation enables providing favorable answers when connections are sold versus a point-to-point scenario.

The foregoing has been a brief overview of the system. The operation of the system is enhanced by the use of the exemplary embodiments of this invention, which are now described in further detail.

As was made apparent above, the system allows a dynamic customization of the Yield value based on the context of the demand (e.g., point of sale, interlining, trip characteristics). The use of a Competition consideration made possible by this invention allows a real time modification of the Yield value based on the commercial strategy of competitors. The use of the invention enables the system to modify in real time or substantially real time a Yield value based on the behavior of identified competitors, at the O&D level, while taking the reference airline load factor into account. Further, the Simulator 16C makes it possible to view the Competition considerations in isolation from, or in combination with, the impacts of other rules. The exemplary embodiments also make it possible to use data (prices) coming from a third party to be managed in real time in the system.

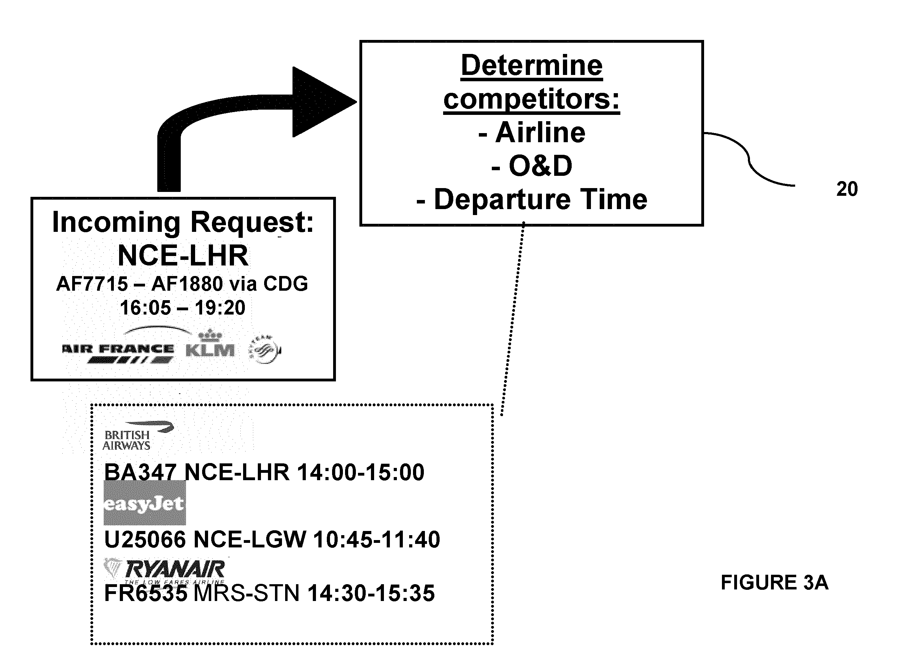

The exemplary embodiments of this invention employ a number of modules. Referring to Figure 3A, in response to an incoming request for a travel solution (e.g., NCE-LHR, or Nice to London Heathrow) a first module 20 is used to determine the Competitors on a route operated by the reference airline. Using business rules the reference airline is able to determine its competitors on an O&D it operates, defining the competitor's O&D (as it can be different NCE-LHR competing with NCE-STN for example), and the departure and arrival time (relative and absolute interval between the reference airline and competitor's travel solution). Combining the departure and arrival time criteria is a technique for the reference airline to constrain the elapsed flight time for the other competitor airlines' travel solutions to be eligible.

The O&D choice is important with regards to Low Cost Carriers (LCCs) that often operate competitive routing from close airports (Beauvais for Paris for example).

From these rules, an automatic process scan the Competitors' prices database to determine the eligible competing travel solution(s) to be monitored for the present request.

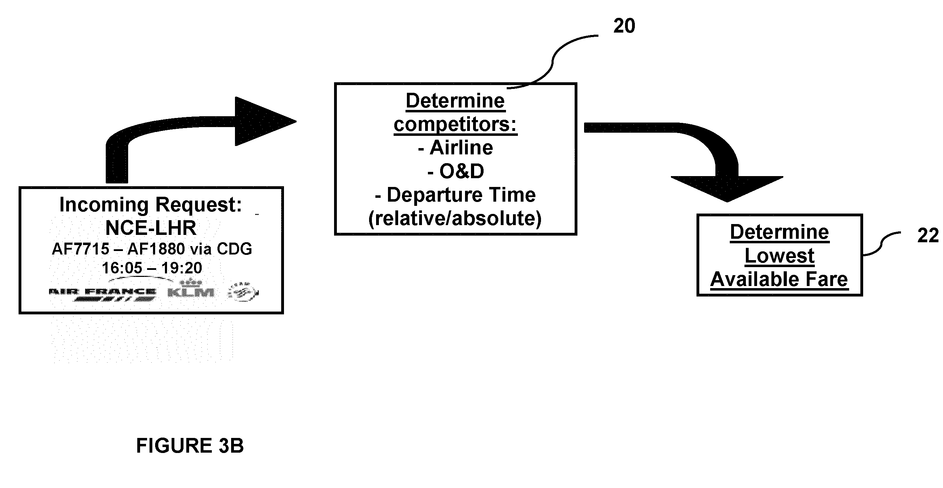

The second module 22, shown in Figure 3B, determines the lowest competitor fares available. Once the competing travel solution(s) have been determined and the competitors' fare information has been fed to the system, the system retrieves the lowest fare available among competing travel solutions.

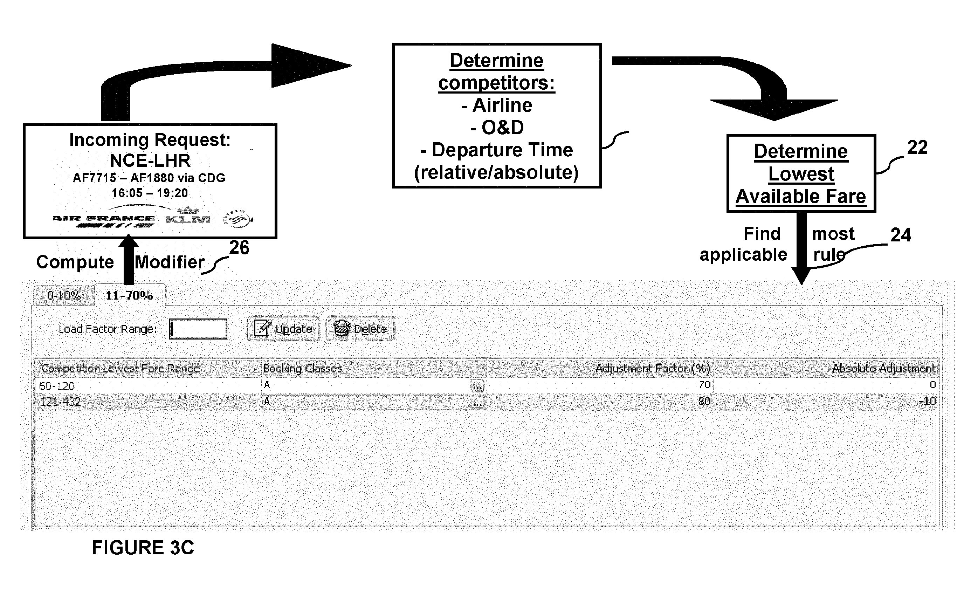

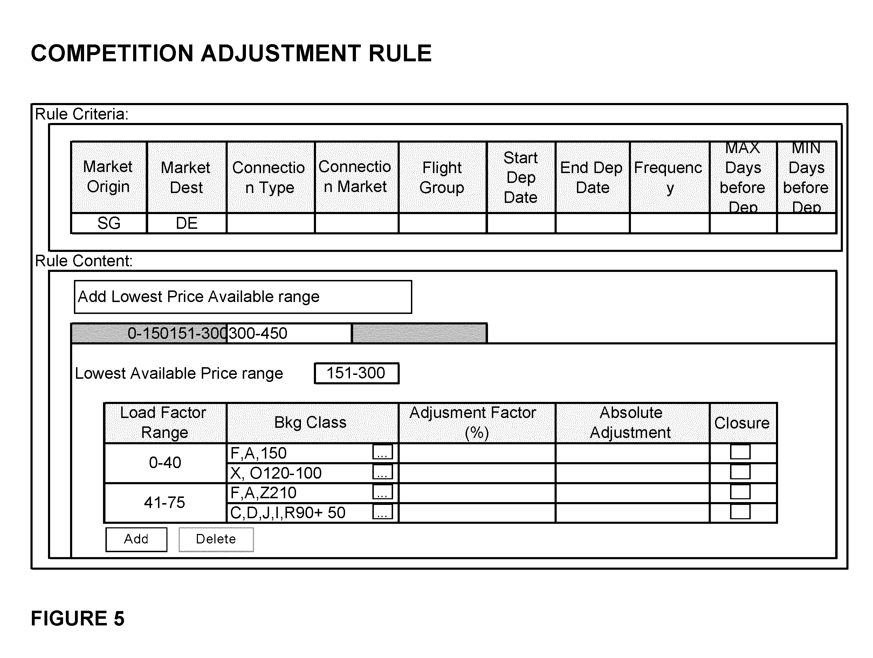

Referring to Figure 3C, once the modules 20 and 22 have completed their tasks a competing lowest fare is available. This fare is then used to look up into the content of a most applicable RAAV Competition Rule's content (24) to determine a modifier (26). The modifier is determined in the rule content per class, the lowest fares available range and the load factors range. The RAAV Competition Adjustment Rule that contains Yield Factor adjustment data is shown in greater detail in Figure 5 and is described below.

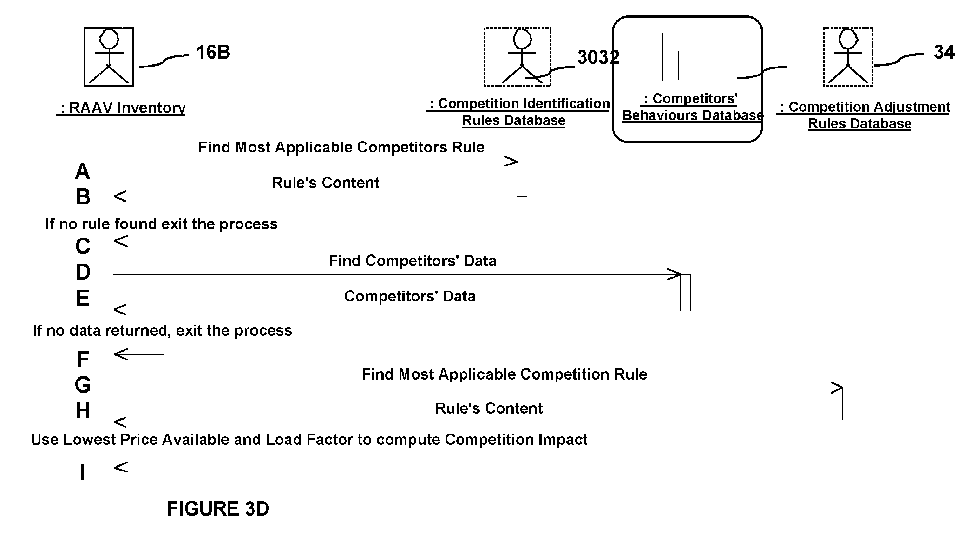

Figure 3D shows an overall process flow between the RAAV inventory 16B (which forms a part of the O&D Revenue Evaluation module 16 shown in Figure 12) and a Competition Identification Rules database 30, a Competitors Behaviors database 32 and a Competition Adjustment Rules database 34.

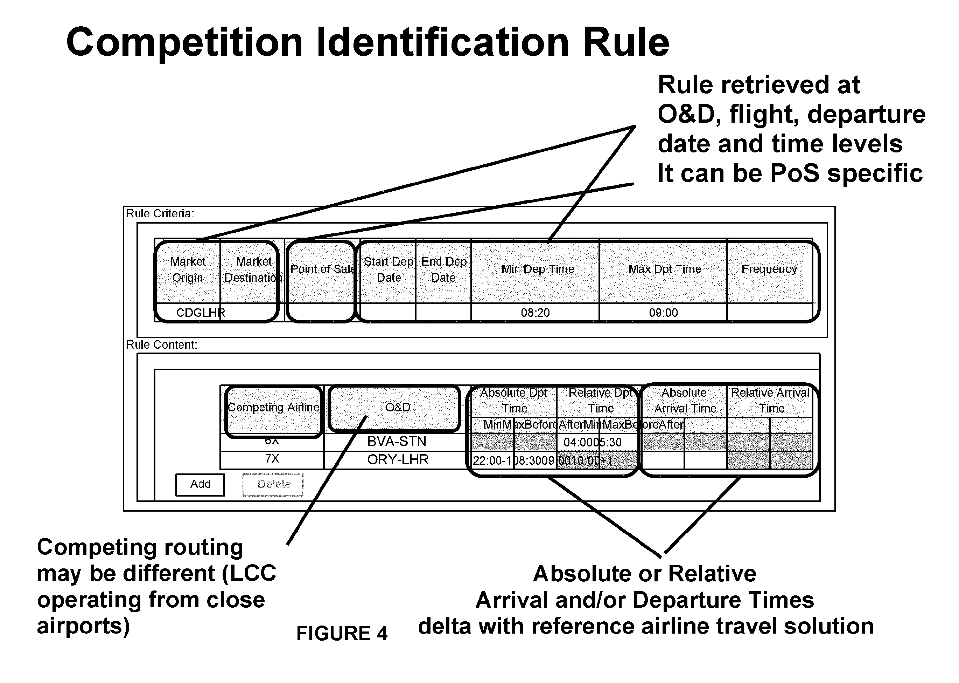

At Step A the Competition Identification Rules database 30 is queried to find a most applicable Competitors Rule, and the content of the Rule is returned at Step B (see Figure 4). If no Competitors Rule is found in the Competition Identification Rules database 30 then the process terminates at Step C. Otherwise at step D the Competitors Behaviors database 32 is queried to find the Competitor's data, which is returned at step E. This data can be data obtained from a third party, as was noted above, and can include the fares currently being charged by competitors. If no Competitor's data is returned the process terminates at step F. Otherwise at step G the Competition Adjustment Rules database 34 is queried to find the most applicable Competition Rule, and the content of the Rule is returned at step H see Figure 5). At step I the RAAV system uses the lowest price available and the load factor of the reference airline to compute the Competition impact at the O&D level.

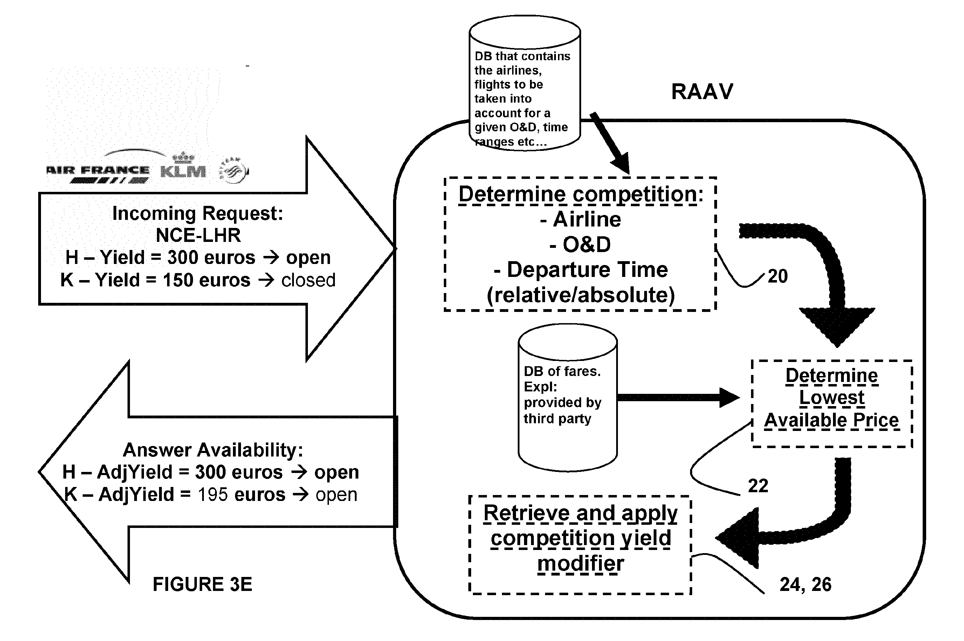

Figure 3E is another view of Figures 3A-3C and the method shown in Figure 3D, and also shows the various databases used by the Determine Competition module 20 and the Determine Lowest Available Fare (Price) module 22. Figure 3E shows that in response to the Incoming Request, and Answer Availability is output wherein the Adjusted Yield can result in opening a previously closed part of the Request.

Figure 4 shows an example of a Competition Identification rule that is used to determine eligibility criteria for another airline travel solution to be competitive. This is the Rule returned in step B of Figure 3D. The Rule has a two parts, a Rule Criteria and Rule Content. The Rule Criteria in this example specifies a rule retrieved in accordance with the O&D, flight, departure data and time. The Rule Criteria may also be Point of Sale specific. Note that the returned Rule Content shows that the competitor's routing may be different than the routing of the reference carrier, e.g., a low cost carrier (LCC) may be operating instead from a near-by airport. Arrival and/or departure times can be absolute or relative (e.g., 10:00 or 10:00 +1).

Figure 5 shows an example of a Competition Adjustment rule that is used to determine Yield adjustments. This is the Rule returned in step H of Figure 3D. This Rule also has a two parts, the Rule Criteria and the Rule Content. The Rule Criteria in this example specifies the O&D. The Rule Content includes a lowest available price range and load factors for various booking classes, their respective adjustment factors (per cent) and an absolute adjustment factor if applicable. This information is used to compute the Competition Impact in step I of Figure 3D.

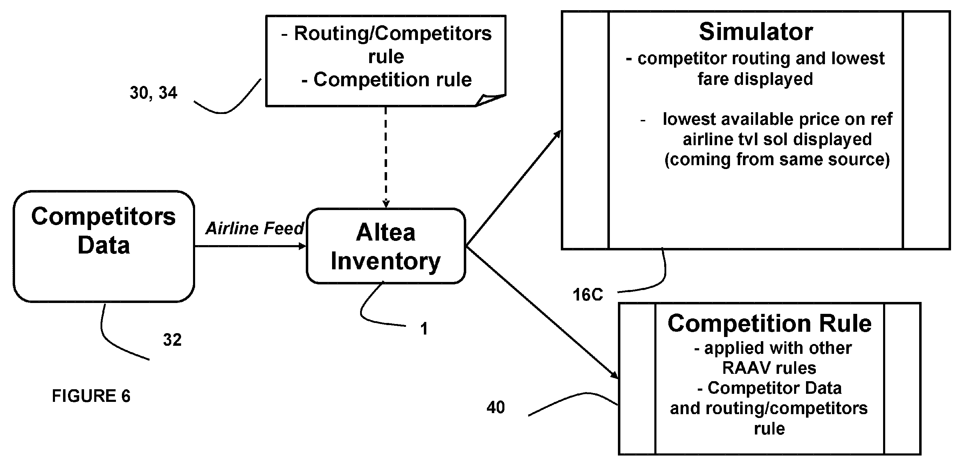

Figure 6 is an overview of the system architecture including the various Rules and interaction with the Simulator 16C. In Figure 6 the inventory 1 (the flight data inventory database 16B of Figure 12) interacts with the competitors data 32 (which can be provided via a feed from the reference airline) as well as the various rules databases 30 and 34 to generate a Competition adjustment 40 that can be applied in conjunction with other RAAV rules. The Simulator 16C is enabled to provide competitor routing and lowest displayed fares, and the lowest available price of the reference airline travel solutions can be displayed (those originated from the same source).

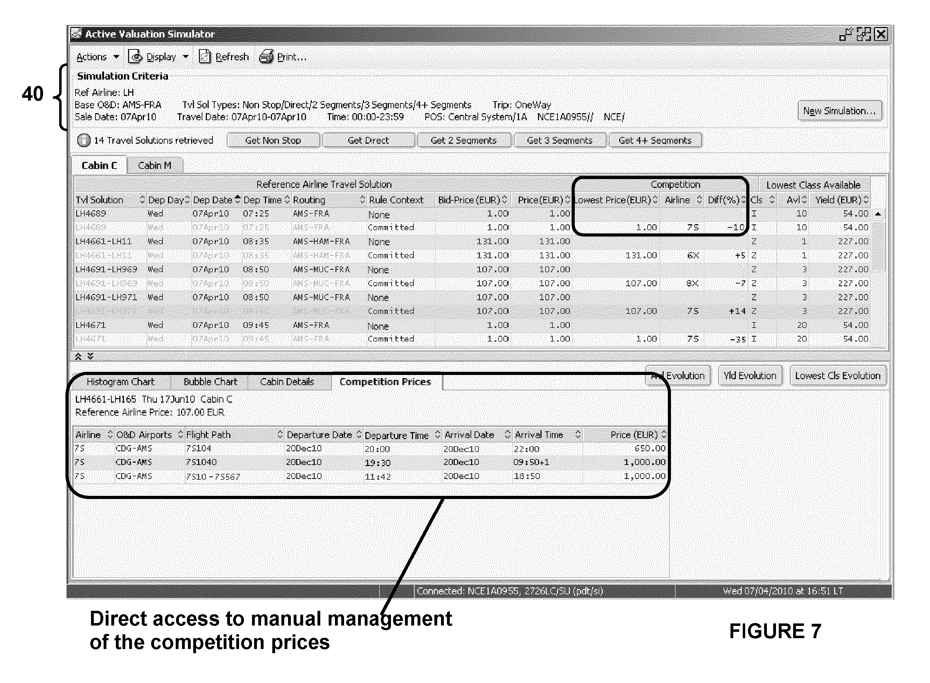

For example, Figure 7 shows an example of simulator screen shot for a set of simulation criteria 40. Note that the Simulator 16C output includes data of the competition and the competition's pricing, and provides direct access to enable manual management of the competitor's prices.

A non-limiting example of the use of this invention is now provided. Assume that a travel agent is attempting to sell Nice - Orly on the 20th March 2011, flight AF6203, in booking class H (standard economy cabin booking class). For this example it can be assumed that AF6203 departure time is 09:05 and AF6203 arrival time is 10:30.

When this request arrives at the Inventory system 1 the system will search for a Yield to compare it to the Bid Price Vector of the flight and compute availability. Assume that during a recent optimization the revenue management system (RMS 3) of the reference airline uploaded a value for this Yield of 110 Euros, which is lower than the current bid price (134 Euros). In this case the Availability based on the Yield value would cause the sale to be rejected.

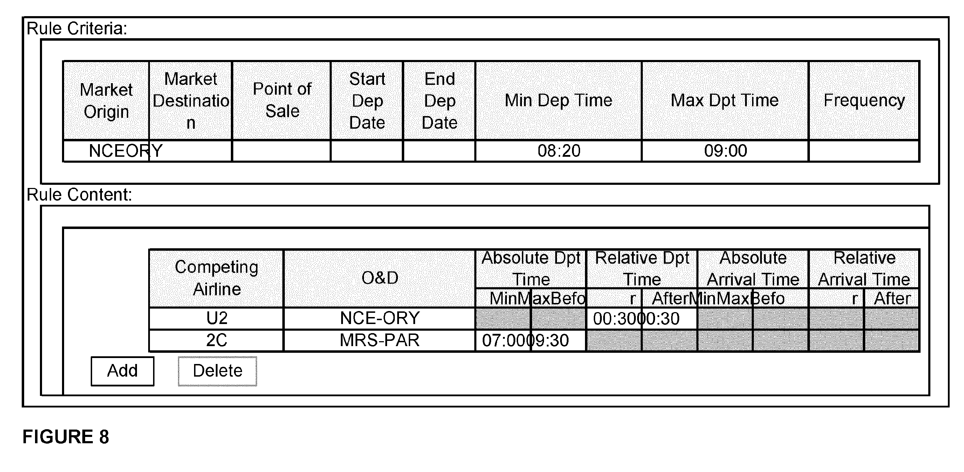

However, in accordance with the enhancements made to the RAAV system by the use of this invention the RAAV system searches for an applicable Competition Identification rule and finds the following. Referring to Figure 8, the reference airline has two competitors on this route: carrier U2 flying from Nice to Orly, and carrier 2C traveling from Marseille to Paris (see the Competition Identification Rule of Figure 4). It might be assumed that rail prices can be included in the competitor's price database.

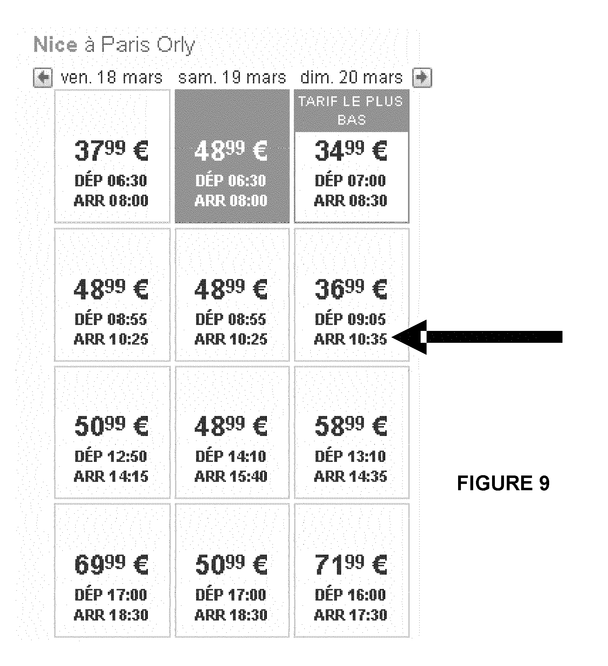

A next step, depicted in Figure 9, finds the lowest available price. Among the available U2 prices shown in Figure 9 only the second price matches the rule departure time criteria, i.e., +/- 30 minutes before or after AF flight departure time of 09:05. If the available prices found are about 70 Euros, the retained lowest available price is 36.99 Euros corresponding to the second row, third column of Figure 9.

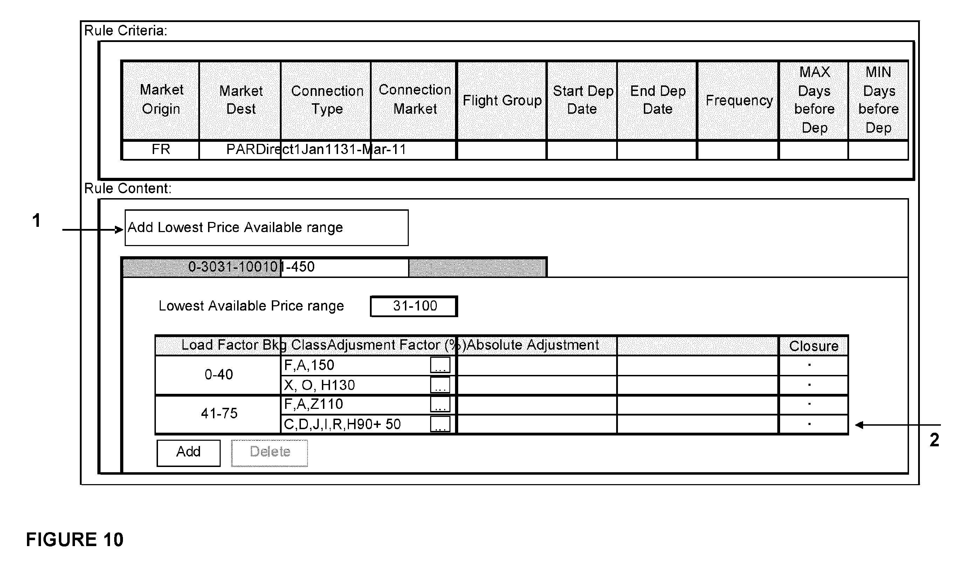

A next step determines the Yield adjustment as in Figure 10 (see the Competition Adjustment Rule of Figure 5). Assume for this non-limiting example that the load factor on the AF flight is below 55%, and assume that this value is below some load value threshold value (e.g., 75%) where competition adjustment is allowed to be performed.

In this case, and in view of the lowest competitor fare being 36.99 euro (arrow 1), based on the Rule Content shown in Figure 10 (arrow 2), the AdjustedYield = 110*0.9 + 50 = 149. That is, the AdjustedYield is equal to the current Yield value (110 Euros) multiplied by, for the current Load Factor and booking class H, the corresponding Adjustment Factor (90%) plus the Absolute Adjustment of +50 Euros, or a total of 149 Euros.

Note that if the lowest competitor fare was found to be, e.g., less than 31 Euros then the retrieved Adjustment Factors and Absolute Adjustment values could differ from those shown for the fare range of 31-100 Euros.

In this example then the sell is not rejected but is accepted, since the Adjusted Yield of 149 Euros is greater than the current bid price of 134 Euros.
Note that the prices remain unchanged and are still computed with the following assumed formula: 110 + charges + taxes. However, the product represented by this booking class with its associated price has been re-opened to be more competitive.

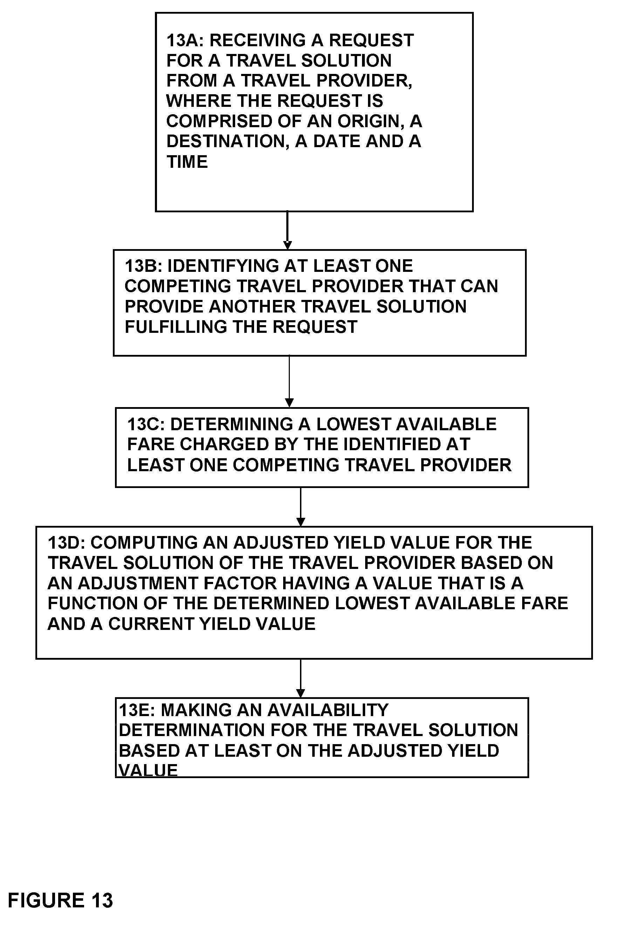

Figure 13 is a logic flow diagram that is descriptive of a method in accordance with the exemplary embodiments of this invention, as well as the result of operating at least one data processor in accordance with a stored program to execute the method. In Figure 13 a computer-implemented method to determine an availability of a travel solution comprises in Block 13A a step of receiving a request for a travel solution from a travel provider, where the request is comprised of an origin, a destination, a date and a time. At Block 13B there is a step of identifying at least one competing travel provider that can provide another travel solution fulfilling the request. At Block 13C there is a step of determining a lowest available fare charged by the identified at least one competing travel provider. At Block 13D there is a step of computing an adjusted yield value for the travel solution of the travel provider based on an adjustment factor having a value that is a function of the determined lowest available fare and a current yield value. At Block 13E there is a step of making an availability determination for the travel solution based at least on the adjusted yield value.

It is pointed out that in a corresponding travel solution the segments and O&D can be different. For example, if the origin is PARIS and if the destination is New York, then all travel solutions having a departure airport in the vicinity of Paris (Paris CDG or Paris ORLY) and an arrival airport in the vicinity of New York are considered herein to be corresponding travel solution.

While described above primarily in the content of a travel reservation system that is airline-centric it should be appreciated that the exemplary embodiments of this invention can be used with any type of transportation modalities, including rail, road and water transport.

Also, it should be appreciated that the method to determine the Yield adjustment by considering competing carriers can be practiced in systems other than the exemplary RAAV system environment, and in some embodiments may be used as a standalone system that does not use or require all of the infrastructure present in the embodiment of the system shown in Figure 12.

Further, those skilled in the art will recognize that the various modules and functions shown in the Figures and discussed above can be implemented using one or more data processing systems and servers, networks and network interfaces in conjunction with various memories that store computer program software and various databases.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent Yield Adjustments and Yield Adjustment calculations may be attempted by those skilled in the art. However, all such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

## Claims

1. A computer-implemented method to determine an availability of a travel solution, comprising:
receiving a request for a travel solution from a travel provider that can provide a travel solution fulfilling the request, the request being comprised of an origin, a destination, a date and a time;
**characterized in that** the method comprises the following steps performed with at least one data processor;
identifying at least one competing travel provider that can provide another travel solution fulfilling the request, the at least one competing travel provider being identified in a database of competitor data stored in data storage means;
determining a lowest available fare charged by the identified at least one competing travel provider;
computing an adjusted yield value for the travel solution of the travel provider based on an adjustment factor having a value that is a function of the determined lowest available fare and a current yield value; and
making an availability determination for the travel solution based at least on the adjusted yield value;
sending the availability determination trough a network for a further display at display means.

2. The method of claim 1, where making the availability determination comprises comparing the adjusted yield value to a current bid price for the travel solution, and replying positively to the request if the adjusted yield value exceeds the current bid price.

3. The method of claim 1, where identifying at least one competing travel provider comprises querying a database, where the query comprises the origin, the destination, a departure date and a departure time.

4. The method of claim 3, where the query further comprises a point of sale.

5. The method as in any one of claims 3 and 4, where a response to the query comprises an identification of at least one competing travel provider providing a corresponding travel solution using the same routing as the travel provider or a different routing, and one of the same or similar absolute or relative departure time, said competing travel solution being said other travel solution.

6. The method as in claim 1, where determining a lowest available fare comprises querying a database of competitor data using the identified at least one competing travel provider.

7. The method of claim 6, where the database of competitor data comprises data that is updated in real time or substantially real time by a third party.

8. The method of claim 1, where the adjustment factor is obtained by querying a database using at least the origin and the destination.

9. The method of claim 1, where the adjustment factor that is used is also a function of a booking class, and comprises a value expressed as a percentage that is multiplied by the current yield value and an optional absolute adjustment value that is added to or subtracted from the result of the multiplication.

10. The method of claim 1, where the adjustment factor has a value that is also a function of a current load factor for the travel solution.

11. The method as in any one of claims 1-10, where the adjustment factor has a value that is also based on at least one of a point of sale rule, a trip characteristics rule, an inter-line yield factor rule and a customer characteristics rule.

12. The method as in any one of claims 1-10, where making the availability determination for the travel solution is also based on at least one of a point of sale rule, a trip characteristics rule, an inter-line yield factor rule and a customer characteristics rule.

13. The method of claim 1, where the travel provider is an airline.

14. The method of claim 1, where the competing travel provider is any one of an airline, a company providing train or boat or bus transportations.

15. A system to determine an availability of a travel solution, comprising:
an interface to receive a request for a travel solution from a travel provider that can provide a travel solution fulfilling the request, the request being comprised of an origin, a destination, a date and a time; **characterized in that** the system comprises at least one data processor configured with at least one non-transitory memory storing computer program code, where execution of the computer program code by the at least one data processor causes the at least one data processor to query a first database to determine at least one competing travel provider that can provide another travel solution fulfilling the request, to query a second database to determine a lowest available fare charged by the identified at least one competing travel provider, to query a third database to obtain an adjustment factor for use in computing an adjusted yield value for the travel solution of the travel provider, where the adjustment factor has a value that is a function of the determined lowest available fare and a current yield value, and to make an availability determination for the travel solution based at least on the adjusted yield value.
